# EUROPEAN PATENT SPECIFICATION

(11) **EP 4 105 078 B1**
(45) Date of publication and mention of the grant of the patent: **21.10.2026**
(21) Application number: 22178492.9
(22) Date of filing: 10.06.2022
(51) Int. Cl.: B60P 1/64, B60P 3/12, B62B 3/02, B65D 90/10

(54) **ROLL-OFF CONTAINER FOR THE TREATMENT OF DAMAGED VEHICLES**
ABROLLCONTAINER FÜR DIE BEHANDLUNG VON BESCHÄDIGTEN FAHRZEUGEN
CONTENEUR ROLL-OFF POUR LE TRAITEMENT DE VEHICULES ENDOMMAGÉS

(30) Priority: 14.06.2021 IT 202100015455
(43) Date of publication of application: 21.12.2022
(73) Proprietor: Iveco S.p.A., 10156 Torino (IT)
(72) Inventor: AIMO BOOT, Marco, 10156 Torino (IT); SANTORO, Francesco, 10156 Torino (IT)
(74) Representative: Fiume, Orazio

(56) References cited:
- EP-A1- 3 263 402
- BR-U2- 202019 022 713
- CN-A- 101 549 784
- CN-A- 107 720 023
- CN-A- 110 371 009
- CN-A- 111 991 728
- DE-U1- 202020 101 186
- US-A1- 2013 153 314
- US-B2- 7 070 002

## Description

### Field of the invention

The present invention relates to a roll-off container for the treatment of out of order vehicles, in particular electrified out of order vehicles.

An electrified vehicle is an electric or hybrid vehicle, i.e. a vehicle that has a battery pack for propelling the same vehicle.

### State of the art

EP3263402 discloses a roll-off container, for decanting or ISO, for the treatment of damaged vehicles, in particular damaged electrified vehicles, comprising a bottom and several side walls that have a receiving area for the vehicle and define a closable opening for transferring the vehicle in or out of the receiving area, a winch arranged on the container, in particular a cable winch, to tow the vehicle into the container, and a number of connections for the introduction and/or discharge of the refrigerant or extinguishing agent into the receiving area.

In any case, it is an elongated container that identifies two long sides and two short sides.

From an examination of the description, it is evident that the aforementioned connections are of a hydraulic nature referring to the refrigerant or extinguishing agent.

The same document provides that, preferably, an infrared camera/video camera may be installed above one of the sides of the container as well as a lighting system to facilitate night operations.

It is worth highlighting that electrified vehicles are equipped with a battery pack generally arranged in a lower part, typically in the floor, of the vehicle.

It has been found that the installation of a camera/video camera on one side of the container pointing downwards does not allow to obtain reliable information due to the strong reflections generated by the container itself and by the vehicle typically made of metal.

If not specifically excluded in the detailed description that follows, what is described in this chapter is to be considered as an integral part of the detailed description.

Document CN 111 991 728 A discloses a roll-off container for the treatment of damaged vehicles according to the preamble of claim 1.

### Summary of the invention

The object of the present invention is to provide a container for damaged electrified vehicles equipped with a battery system at risk of thermal drift, which allows easier use of the same container.

The basic idea of the present invention is to create one or more inspection windows that can be closed in at least one of the side walls of the container so as to be able to monitor any overheating of the battery pack from one side of the vehicle.

The window is arranged in an intermediate part of the height of the perimeter wall and preferably in the lower half of the wall.

When a damaged vehicle is introduced inside the container it can be monitored visually and/or by means of a thermal imaging camera through at least one of the inspection windows and when excessive heat development is detected, the window can be closed to flood the container with liquid refrigerant or extinguisher.

Advantageously, to adequately monitor the vehicle it is not necessary to keep the vehicle outside the container to have an adequate infrared view of the areas of interest of the vehicle.

Therefore, the present solution allows the status of the battery pack of a damaged vehicle to be monitored in a safe and reliable way without putting at risk personnel in the vicinity of the vehicle.

The closable inspection window is arranged along one wall of the long sides of the container.

Several inspection windows can be provided on at least one long side of the container, in order to inspect the area where the battery pack is associated with the vehicle. According to a further preferred aspect of the invention, the container has no winch.

More specifically, the opposite wall to the wall that can be opened for the introduction of the vehicle is equipped with two deflection rollers, one of which arranged at the upper edge of the wall and one arranged in a lower part of the wall, inside the container.

A rope is operated by the arm of the container vehicle. In other words, the arm of the container vehicle, after unloading the container, is hooked to the rope used to force the damaged vehicle to enter the container reciving volume.

Advantageously, according to this preferred variant of the invention, it is not necessary to equip the container with further organs, nor it is necessary to power it electrically.

According to a further preferred aspect of the invention, considering a longitudinal direction of the vehicle, associated with the center line of the bottom of the container, nozzles are arranged to spray the coolant/extinguishing liquid under the vehicle housed in the container.

Hereinafter the coolant/extinguishing liquid is referred to simply as "liquid".

This fact is particularly advantageous because it allows, in some cases, to avoid flooding the container by introducing a significant mass of liquid. It is worth noting that the liquid can potentially become contaminated and therefore it is necessary to treat it before discard it. Therefore, advantageously, this solution allows to enormously limit the quantity of liquid used in the container.

The liquid can be stored in a tank obtained in the bottom or in a wall of the container and recirculated by spraying it continuously under the floor of the vehicle housed in the container.

Advantageously, the container is flooded only if the sprayed liquid is not sufficient to prevent the thermal drift of the battery pack.

A recirculation pump can be powered by a battery, fixed to the container or by an external source.

According to a preferred variant of the invention, the bottom of the container is not flat but has an emerging longitudinal and central portion.

This fact allows the liquid to be collected towards the side walls of the container, from where it is easier to withdraw the liquid to recirculate it or to extract it from the container.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Fig. 1 shows an example of container according to the present invention;
Fig. 2 shows a side view of the container of Figure 1;
Fig. 3 shows a rear view of a further example of container of the present invention;
Figs. 4 and 5 show further rear views of examples of containers according to the present invention,
Fig. 6 shows a side view of the variant of fig. 5;
Fig. 7 shows a rear view of a further example of container of the present invention,
Fig. 8 shows a system for introducing a vehicle into a container receiving area according to any of the previous variants.

The same reference numbers and letters in the figures identify the same elements or components or functions.

It should be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of exemplary embodiments

With reference to Figgs. 1 and 2, an example of container C according to the present invention is shown.

It is specifically adapted for the treatment of damaged vehicles, in particular damaged electrified vehicles.

The container comprises a bottom F and several perimeter walls WL, FWL, OP, which define a volume A for receiving a damaged vehicle V. The perimeter walls are approximately vertical when the container is in operational conditions, i.e. in conditions of receiving a damaged vehicle. Preferably, the container is open at the top, i.e. without a wall parallel to the bottom F. However, it could also be equipped with a closing roof.

The container has a longitudinal shape with
- a pair of side walls LWL, parallel to each other,
- a front wall FWL, which when the container is on board a container vehicle TK faces the vehicle cabin and
- a rear wall OP, which defines a closable opening to allow the damaged vehicle to enter and exit the receiving volume A.

At least one of the side walls LWL of the container is equipped with at least one inspection window WD, which can be closed tightly, to inspect the receiving volume. Advantageously, it is possible to inspect the vehicle with an infrared camera, directly at the position of the relative battery pack.

Preferably, the inspection window is arranged in a lower half of the side wall and/or in an intermediate position with respect to the longitudinal development of the container.

The rear wall is formed by a pair of doors each hinged to a respective side wall WL.

When the doors are not closed, they are arranged to make a seal, so as to allow the flooding of the receiving volume A.

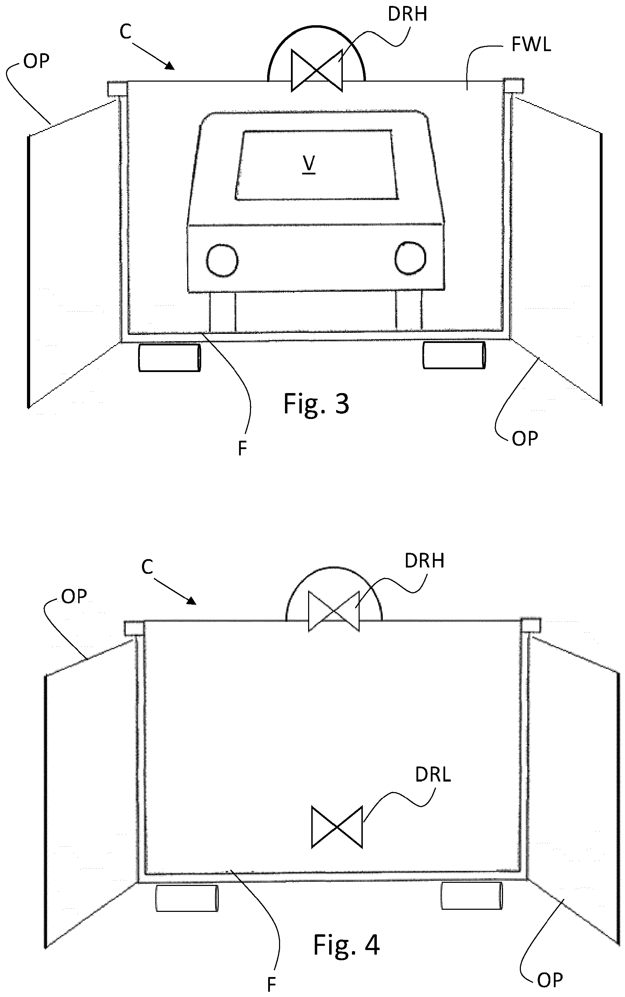

According to a first preferred variant of the container, see Figures 3 - 6, it comprises a first deflection roller DRH arranged approximately on the upper edge of the front wall FWL and a second deflection roller DRL associated in a lower part of the front wall inside of the receiving volume, so as to be able to arrange a tow rope RP between the first and second rollers and to allow a damaged vehicle to be towed inside the receiving volume.

The second roller is arranged in such a way as to allow the vehicle to be towed parallel to the bottom F of the container.

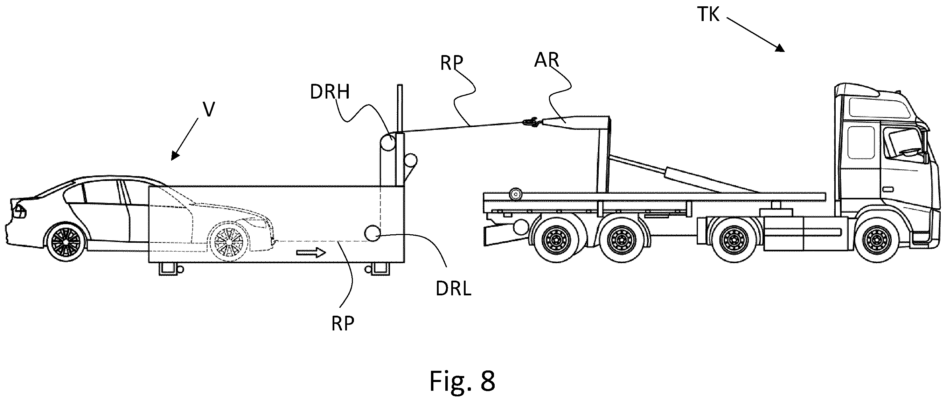

With reference to Figure 8, according to a preferred method for using the container, the same arm AR of the container carrier vehicle TK is used, arranged for the transport of the roll-off container, to move the tow rope.

In particular, the towing rope RP is connected to the arm after the container has been unloaded, therefore a retraction of the arm induces a retraction of the rope. If this is previously connected to a vehicle V, this can be towed inside the receiving volume A.

This is particularly advantageous, since it is not necessary to electrically feed a winch on board the container.

According to another variant of the invention, a winch is associated with any point of the container vehicle TK or even a further different vehicle and the tow rope RP is operationally associated with the winch fixed on the container vehicle or further vehicle.

Generally, for safety reasons, the damaged vehicle is transported to a shelter by means of a tow truck rather than on board the container C. Therefore, a phase in which the damaged vehicle is extracted from the container to be placed on a tow truck must be envisaged. Tow trucks are generally equipped with a winch, therefore, it is possible to use the tow truck winch to introduce the damaged vehicle into the receiving volume, thanks to the two deflection rollers, and to extract it from the receiving volume through the opening of the rear doors OP.

Alternatively, the container vehicle TK, which must necessarily be present to transport the container C, can cooperate in the towing phases of the damaged vehicle within the receiving volume.

It is preferable that the rope has a release portion in proximity of the container vehicle so as to be able to move the container vehicle away from the container, in the event of a fire in the container.

According to the invention, the container comprises two or more nozzles J associated with the bottom F of the container arranged to spray the coolant/extinguishing liquid under the damaged vehicle. They are preferably arranged according to a longitudinal and medial alignment of the vehicle.

Although a single alignment of nozzles is shown in the figures, it is possible to arrange several alignments parallel to each other in order to hit the entire lower part of a damaged vehicle.

According to the invention the container comprises a tank for the coolant/extinguishing liquid arranged under or in the bottom F and communicating with the receiving volume A, so that the sprayed liquid returns falling into the tank and a pump is arranged to take the liquid from the tank and spray it through the two or more nozzles J. In other words, the liquid is recirculated so as to ensure a first cooling of the vehicle battery pack, allowing to postpone the flooding of the container only when this solution appears insufficient.

Preferably, the bottom F comprises an emerging longitudinal and medial part EP, so as to induce the liquid to be collected at the lateral walls of the container.

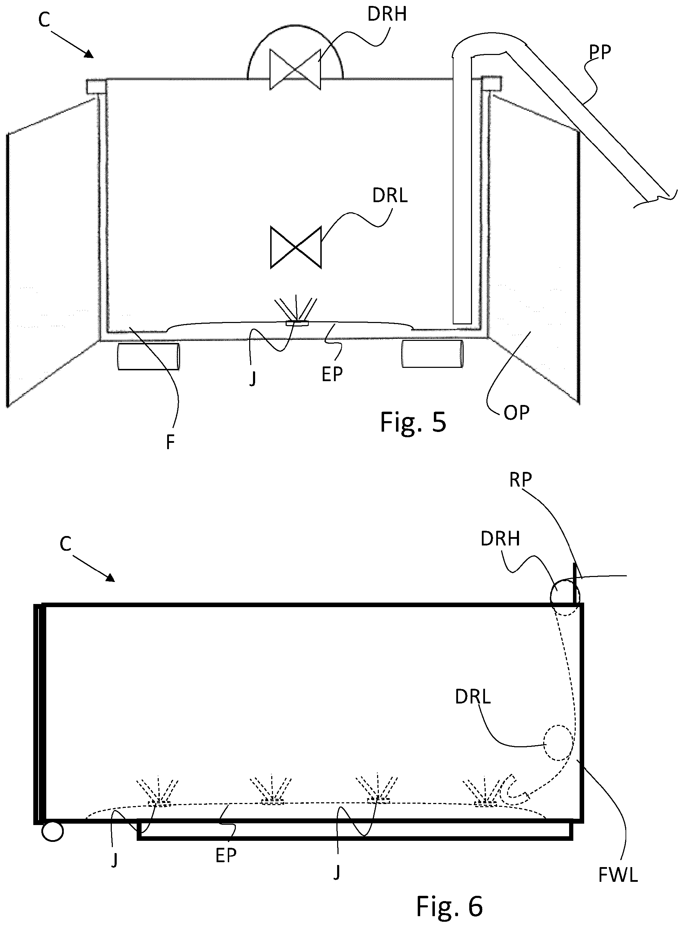

In this regard, it is worth highlighting that the emerging EP part, occupying the volume, helps to limit the quantity of liquid to be introduced into the container when it is necessary to flood the battery pack of the damaged vehicle. Figure 5 shows, although the doors are open, the insertion of a tube PP to suck up the coolant/extinguishing liquid. Fire brigade vehicles are generally capable of sucking up liquids and are therefore equipped with tanks to contain contaminated liquids, pumps and pipes.

When in a procedure for cooling or extinguishing an electrified vehicle it is necessary to empty the container of the liquid, then a suction pipe PP can be arranged so that its end approaches a perimeter wall. This is particularly advantageous because it allows to easily suck most of the liquid out of the container before pulling the damaged vehicle out of the container.

From figure 5 it can be understood that by virtue of the emerging, medial and longitudinal part EP, the liquid is collected along the walls of the container and it makes easier its suction.

Figure 6 shows a side view of the container of Figure 5, in which however the doors OP, which define the rear wall, are closed.

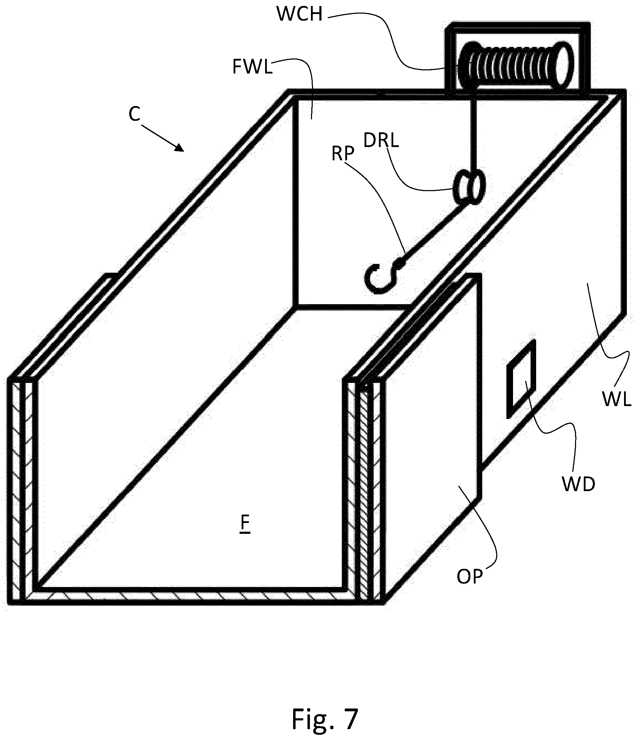

Figure 7 shows a solution that implements a winch WCH in place of the first deflection roller DRH.

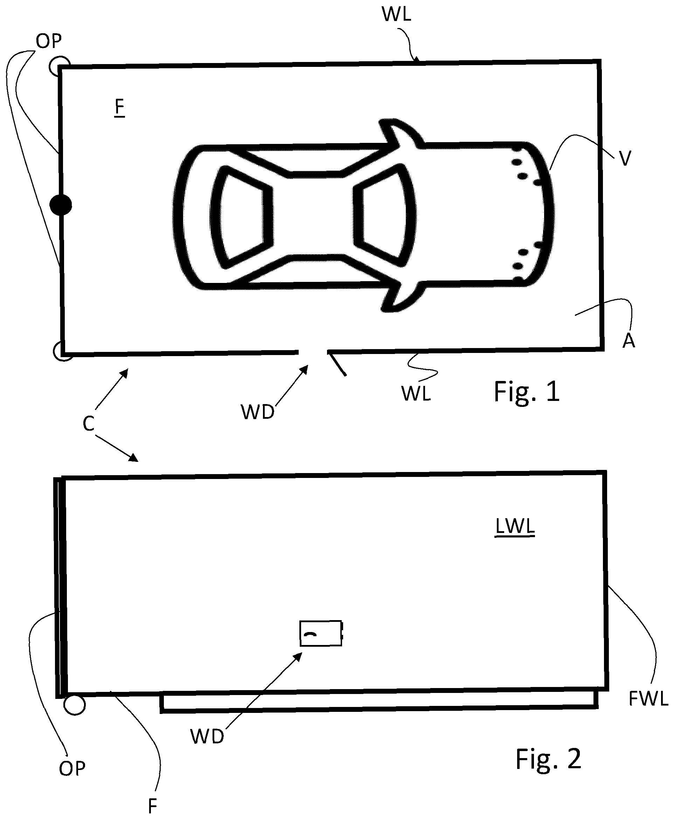

Obviously, this winch needs to be electrically powered. It can be powered by a battery pack associated with the container or associated with the TK container vehicle. According to a preferred method of use of the container, according to figures 1 - 6 and 8, the following phases are envisaged:
- the container vehicle TK with container C on board reaches a damaged vehicle V and positions itself in alignment with the damaged vehicle and suitably spaced,
- if the doors OP of the container are not open they are opened and fixed along the side walls LW of the container,
- the container vehicle TK operates the arm AR to unload the container,
- the tow rope RP is connected to the damaged vehicle V,
- The arm AR of the container vehicle is operated to tow the damaged vehicle inside the receiving volume A of the container,
- The doors OP of the container are closed,
- The phase of monitoring the damaged vehicle begins through at least one of the inspection windows WD, preferably by means of a thermal camera,
- if a rise in the temperature of the battery pack of the damaged vehicle is detected,
- closing the at least one inspection windows and
- introduction of the coolant into the receiving volume.

The introduction of the liquid, as illustrated above, can be carried out by spraying or nebulization, at least in a first phase in which it is believed that the thermal drift process of the battery system is considered reversible, and/or by flooding the receiving volume.

Liquid spraying is believed to be particularly efficient when the liquid temperature is relatively low, for example due to the ambient temperature. This avoids the need of flooding the container to immerse the battery pack of the damaged vehicle in the liquid.

When it is believed that there is no more risk, the coolant can be extracted from the receiving volume. When the liquid introduced into the receiving volume is in a minimum quantity, sprayed under the damaged vehicle, it is not necessary to carry out further operations, since, as detailed above, the liquid returns by gravity to the tank made in the bottom of the container.

When the liquid introduced into the receiving volume is supplied from outside the container, then it can proceed by immersing a duct PP of a fire brigade vehicle in the receiving volume and sucking the liquid.

According to a preferred variant of the invention, the container can be equipped with hydraulic connections similar to those described in EP3263402 to connect a PP duct and to proceed with the evacuation of the liquid from the receiving volume.

It is advantageous to arrange connections along one of the side walls, at the bottom of the container, so as to obtain an easy evacuation of all the liquid.

Also in this case, the part EP that emerges from the bottom F of the container can help.

A preferred variant of the invention can provide the emerging part EP from the bottom arranged as in figures 5 and 6, without the liquid spraying system and without the winch WCH.

In this case the container is entirely "passive", that is, not electrically powered.

From the above description, the person skilled in the art is able to realize the object of the invention without introducing further construction details.

## Claims

1. A roll-off container (C) for the treatment of damaged vehicles, in particular damaged electrified vehicles, comprising a bottom (F) and several perimeter walls (LWL, FWL, OP) that define a volume (A) for receiving a damaged vehicle (V) and wherein the container has a longitudinal shape with a pair of side walls (LWL), a front wall (FWL) and a rear wall that defines a closable opening (OP) to transfer the vehicle into or out of the volume (A), wherein at least one of the side walls (LWL) is equipped with at least one inspection window (WD), which can be closed in a liquid-tight manner, the container being **characterised in that** it comprises two or more nozzles (J) associated with the bottom (F) of the container for spraying the coolant/extinguishing liquid under the damaged vehicle, the container comprising a coolant/extinguishing liquid tank arranged under or in the bottom (F) and communicating with the receiving volume, so that the sprayed liquid returns to the tank and a pump arranged to withdraw the liquid from the tank and spray it through two or more nozzles (J) associated with the bottom and oriented so as to direct the liquid under the damaged vehicle (V).

2. Container according to claim 1, wherein the inspection window is arranged in a lower half of the side wall and/or in an intermediate position with respect to the longitudinal development of the container.

3. Container according to one of claims 1 or 2, wherein the rear wall is formed by a pair of doors each hinged to a respective side wall (WL).

4. Container according to any one of the preceding claims, further comprising a first deflection roller (DRH) arranged approximately on the upper edge of the front wall (FWL) and a second deflection roller (DRL) associated in a lower part of the front wall, inside the volume (A), so as to allow a tow rope (RP) to be arranged to tow a damaged vehicle inside the volume.

5. Container according to any one of the preceding claims, wherein the bottom (F) comprises an emerging longitudinal and medial portion, so as to induce the liquid to collect in correspondence with the lateral walls of the container.

6. Method of handling a damaged vehicle equipped with a battery system at risk of thermal drift, the method being designed to introduce the vehicle into a roll-off container according to claim 4, the method comprising the step of operating a tow rope (RP) associated with the first deflection roller (DRH) and the second deflection roller (DRL), by means of an arm (B) of a container vehicle arranged to unload the container from the container vehicle after the container is already unloaded.

7. A method of handling a damaged vehicle to introduce the vehicle into a roll-off container according to claim 4, the method comprising operating a tow rope (RP) associated with the first deflection roller (DRH) and with the second return roller return (DRL), by means of a winch permanently associated with a tow truck.

## Patentansprüche

1. Abrollcontainer (C) für die Behandlung von beschädigten Fahrzeugen, insbesondere von beschädigten Elektrofahrzeugen, bestehend aus einem Boden (F) und mehreren umlaufenden Wänden (LWL, FWL, OP), die ein Volumen (A) zur Aufnahme eines beschädigten Fahrzeugs (V) bilden, wobei der Container ist länglich geformt und hat ein Paar Seitenwände (LWL), eine Vorderwand (FWL) und eine Rückwand, die eine wiederverschließbaren Öffnung (OP) definiert zum Ein- und Ausfahren des Fahrzeugs in bzw. aus dem Volumen (A) auf, wobei mindestens eine der Seitenwände (LWL) ist mit mindestens einem flüssigkeitsdicht verschließbaren Inspektionsfenster (WD) ausgestattet, wobei der Container zeichnet sich dadurch aus, dass er zwei oder mehr mit dem Boden (F) des Containers verbundenen Düsen (J) zum Versprühen von Kühl-/Löschmittel unter das beschädigte Fahrzeug umfasst, wobei der Container umfasst einen unter oder im Boden (F) angeordneten und mit dem Aufnahmevolumen verbundenen Behälter für Kühl-/Löschmittel, sodass das versprühte Kühlmittel/Löschmittel in den Behälter zurückfließt, und mit einer Pumpe, die zum Abpumpen des Kühlmittels/Löschmittels aus dem Behälter angeordnet ist, wobei aus dem Behälter wird Flüssigkeit durch zwei oder mehr am Boden angebrachte Düsen (J) versprüht, die so ausgerichtet sind, dass die Flüssigkeit unter das beschädigte Fahrzeug (V) geleitet wird.

2. Behälter nach Anspruch 1, wobei sich das Inspektionsfenster in der unteren Hälfte der Seitenwand und/oder in einer Zwischenposition in Längsrichtung des Behälters befindet.

3. Behälter nach Anspruch 1 oder 2, wobei die Rückwand aus zwei Türen besteht, die jeweils an einer Seitenwand (WL) angelenkt sind.

4. Behälter nach einem der vorhergehenden Ansprüche, ferner umfassend eine erste Umlenkrolle (DRH), die sich etwa an der Oberkante der Vorderwand (FWL) befindet, und eine zweite Umlenkrolle (DRL), die im unteren Bereich der Vorderwand innerhalb des Volumens (A) angeordnet ist, um ein Abschleppseil (RP) zum Einführen eines beschädigten Fahrzeugs in das Volumen zu ermöglichen.

5. Behälter nach einem der vorhergehenden Ansprüche, dessen Boden (F) einen längs und mittig hervorstehenden Abschnitt aufweist, um die Flüssigkeitssammlung an den Seitenwänden des Containers zu fördern.

6. Verfahren zum Einbringen eines beschädigten Fahrzeugs mit einem thermisch bedingten Batteriesystem, wobei das Verfahren derart strukturiert ist, um das Fahrzeug in einen Abrollcontainer nach Anspruch 4, wobei das Verfahren umfasst den Schritt des Betätigens eines mit der ersten und zweiten Umlenkrolle (DIR) verbundenen Abschleppseils (RP) mittels eines Arms (B) eines Containerfahrzeugs, der zum Entladen des Containers vom Containerfahrzeug dient, nachdem dieser bereits entladen wurde.

7. Verfahren zum Umgang mit einem beschädigten Fahrzeug, um das Fahrzeug in einen Abrollcontainer einzuführen nach Anspruch 4, wobei das Verfahren das Betätigen eines mit der ersten Umlenkrolle (DRH) und der zweiten Rücklaufrolle (DRL) verbundenen Abschleppseils (RP) mittels einer fest an einem Abschleppwagen angebrachten Winde umfasst.

## Revendications

1. Conteneur roll-off (C) pur le traitement de véhicules endommagés, notamment des véhicules électriques endommagés, comprenant un fond (F) et plusieurs parois périmétriques (LWL, FWL, OP) qui définissent un volume (A) destiné à recevoir un véhicule endommagé (V), et dans lequel le conteneur a une forme longitudinale avec une paire de parois latérales (LWL), une paroi avant (FWL) et une paroi arrière qui définit une ouverture refermable (OP) pour transférer le véhicule dans ou hors du volume (A), dans lequel au moins une des parois latérales (LWL) est équipée d'au moins une fenêtre d'inspection (WD), qui peut être fermée de manière étanche aux liquides, le conteneur étant **caractérisé en ce qu'**il comprend deux ou plusieurs buses (J) associées au fond (F) du conteneur pour pulveriser le liquide de refroidissement /d'extinction sous le véhicule endommagé, le conteneur comprenant un réservoir de liquide de refroidissement/d'extinction disposé sous ou dans le fond (F) et communiquant avec le volume de réception, de sorte que le liquide pulvérisé retourne au réservoir et une pompe disposée pour retirer le liquide du réservoir et le pulvériser à travers deux ou plusieurs buses (J) associées au fond et orientées de manière à diriger le liquide sous le véhicule endommagé (V).

2. Conteneur selon la revendication 1, dans lequel la fenêtre d'inspection est disposée dans une moitié inférieure de la paroi latérale et/ou dans une position intermédiaire par rapport au développement longitudinal du conteneur.

3. Conteneur selon l'une des revendications 1 ou 2, dans lequel la paroi arrière est formée d'une paire de portes chacune articulée à une paroi latérale respective (WL).

4. Conteneur selon l'une quelconque des revendications précédentes, comprenant en outre un premier rouleau de déviation (DRH) disposé approximativement sur le bord supérieur de la paroi avant (FWL) et un deuxième rouleau de déviation (DRL) associé dans une partie inférieure de la paroi avant, à l'intérieur du volume (A), de manière à permettre à une corde de remorquage (RP) d'être disposée pour remorquer un véhicule endommagé à l'intérieur du volume.

5. Conteneur selon l'une quelconque des revendications précédentes, dans lequel le fond (F) comprend une partie longitudinale et médiane émergente, de manière à inciter le liquide à s'accumuler en correspondance avec les parois latérales du conteneur.

6. Procédé de traitement d'un véhicule endommagé équipé d'un système de batterie susceptible de dérive thermique, le procédé étant conçu pour introduire le véhicule dans un conteneur roll-off selon la revendication 4, le procédé comprenant l'étape de mise en marche d'une corde de remorquage (RP) associée au premier rouleau de déviation (DRH) et au deuxième rouleau de déviation (DRL), au moyen d'un bras (B) d'un véhicule porte-conteneurs disposé pour décharger le conteneur du véhicule porte-conteneurs après que le conteneur soit déjà déchargé.

7. Procédé de manipulation d'un véhicule endommagé pour introduire le véhicule dans un conteneur roll-off selon la revendication 4, le procédé comprenant l'actionnement d'une corde de remorquage (RP) associée au premier rouleau de déviation (DRH) et au deuxième rouleau de retour (DRL), au moyen d'un treuil associé en permanence à un camion de remorquage.
